# EUROPÄISCHE PATENTSCHRIFT

(11) **EP 2 302 995 B1**
(45) Veröffentlichungstag und Bekanntmachung des Hinweises auf die Patenterteilung: **07.03.2012**
(21) Anmeldenummer: 09753793.0
(22) Anmeldetag: 13.05.2009
(51) Int. Cl.: A01D 43/08

(54) **STEUERANORDNUNG ZUR KONTROLLE DES ÜBERLADENS LANDWIRTSCHAFTLICHEN ERNTEGUTS VON EINER ERNTEMASCHINE AUF EIN TRANSPORTFAHRZEUG**
CONTROL ARRANGEMENT FOR CONTROLLING THE TRANSFER OF AGRICULTURAL CROP FROM A HARVESTING MACHINE TO A TRANSPORT VEHICLE
DISPOSITIF DE COMMANDE POUR CONTRÔLER LE TRANSFERT DE RÉCOLTE AGRICOLE D'UNE MOISSONNEUSE SUR UN VÉHICULE DE TRANSPORT

(30) Priorität: 27.05.2008 DE 102008002006
(43) Veröffentlichungstag der Anmeldung: 06.04.2011
(73) Patentinhaber: Deere & Company, Moline, IL 61265-8098 (US)
(72) Erfinder: KORMANN, Georg, 66482 Zweibrücken (DE)
(74) Vertreter: Holst, Sönke
(86) Internationale Anmeldenummer: PCT/EP2009/055762
(87) Internationale Veröffentlichungsnummer: WO 2009/144138

(56) Entgegenhaltungen:
- EP-A- 0 070 015
- EP-A- 1 645 178
- US-A1- 2002 083 695

## Beschreibung

Die Erfindung betrifft eine Steueranordnung zur Kontrolle des Überladens landwirtschaftlichen Ernteguts von einer Erntemaschine auf ein einen Ladebehälter umfassendes Transportfahrzeug, wobei die Steueranordnung betreibbar ist, das Erntegut während des Erntebetriebs durch eine Austrageinrichtung der Erntemaschine einer vorbestimmten Beladestrategie folgend selbsttätig sukzessive an unterschiedlichen Stellen des Ladebehälters abzulegen.

### Stand der Technik

Bei der Ernte von landwirtschaftlichen Gütern auf einem Feld ist es gängige Praxis, dass eine Erntemaschine ein neben der Erntemaschine herfahrendes Transportfahrzeug mit geerntetem Gut belädt. Ein Ladebehälter des Transportfahrzeugs, bei dem es sich beispielsweise um einen Schlepper mit Anhänger oder einen Lastwagen handelt, wird während der Fahrt durch eine Austrageinrichtung der Erntemaschine mit dem geernteten Gut beladen, beispielsweise bei einem Feldhäcksler durch einen Austragschacht und bei einem Mähdrescher durch ein Abtankrohr. Die Austrageinrichtung ist in der Regel um eine vertikale Achse drehbar an der Erntemaschine befestigt und zwischen einer Ruhestellung, in der sie etwa parallel zur Längsachse der Erntemaschine orientiert ist, und einer Arbeitsposition, in der sie sich quer zur Fahrtrichtung der Erntemaschine erstreckt, verschwenkbar. Zusätzlich kann die Höhe des abgabeseitigen Endes der Austrageinrichtung variierbar sein, wie auch die Position einer Auswurfklappe, welche den Winkel definiert, unter dem das geerntete Gut abgegeben wird.

Bei in ihrer Abgabeposition nicht verstellbaren Austrageinrichtungen, wie sie üblicherweise an Mähdreschern verwendet werden, hat der Fahrer des Transportfahrzeugs für die gleichmäßige und vollständige Befüllung des Ladebehälters zu sorgen, indem er nach und nach unterschiedliche Stellen des Ladebehälters unterhalb der Austrageinrichtung positioniert. Diese Aufgabe ist relativ anspruchsvoll und ermüdend, da Erntegutverluste durch auf das Feld fallendes Erntegut zu vermeiden sind.

Bei verstellbaren Austrageinrichtungen, wie sie üblicherweise an Feldhäckslern verwendet werden, wird die Position der Austrageinrichtung im einfachsten Fall manuell durch den Fahrer der Erntemaschine gesteuert, wozu ihm Eingabeeinrichtungen in der Kabine zur Verfügung stehen, die zur Verstellung der Austrageinrichtung dienende Aktoren ansteuern. Dabei hat der Fahrer der Erntemaschine Sorge zu tragen, dass der gesamte Ladebehälter des Transportfahrzeugs hinreichend befüllt wird, was durch sukzessives Ausrichten der Austrageinrichtung auf unterschiedliche Punkte auf dem Ladebehälter hin erfolgt. Sollte das Transportfahrzeug nach vorn oder hinten oder zur Seite hin von seiner Sollposition abweichen, ist die Position der Austrageinrichtung manuell nachzustellen. Hierbei ist als nachteilig anzusehen, dass die Steuerung der Position der Austrageinrichtung einen beträchtlichen Teil der Aufmerksamkeit des Fahrers in Anspruch nimmt, was zu einer ermüdenden Arbeit für den Fahrer der Erntemaschine führt.

Die DE 44 03 893 A1 beschreibt einen Feldhäcksler mit einer Austrageinrichtung, an deren abgabeseitigem Ende ein Entfernungsmesser angebracht ist, der die Höhe des Ernteguts im Ladebehälter erfasst. Sobald das Erntegut eine vorgegebene Höhe erreicht hat, wird die Austrageinrichtung verstellt, bis der gesamte Ladebehälter gefüllt ist. Hier findet eine den Fahrer der Erntemaschine weitgehend entlastende Automatisierung statt, die allerdings einen aufwändigen Entfernungsmesser erfordert.

In der EP 1 219 153 A wurde vorgeschlagen, den Ladebehälter selbsttätig oder manuell gegenüber der Erntemaschine in eine Position zu verbringen, in der er befüllt werden kann. Bei starren Austrageinrichtungen (Mähdrescher) wird mittels einer Datenfernübertragungseinrichtung eine Positionsinformation der Austrageinrichtung auf das Transportfahrzeug übertragen und die Position des Transportfahrzeugs angepasst, während bewegliche Austrageinrichtungen (Feldhäcksler) basierend auf Daten hinsichtlich der Position des Ladebehälters und ihrer eigenen Position selbsttätig in eine Position verbracht werden, in der sie den Ladebehälter befüllen. Wenn der Fahrer erkennt, dass ein Bereich des Ladebehälters hinreichend mit Erntegut beaufschlagt wurde und nunmehr ein anderer Bereich zu befüllen ist, wird die Position der Austrageinrichtung manuell durch den Fahrer der Erntemaschine verändert. Reicht der Bewegungsbereich der Austrageinrichtung nicht mehr hin, um noch nicht hinreichend gefüllte Bereiche des Ladebehälters zu erreichen, wird selbsttätig die relative Position des Transportfahrzeugs zur Erntemaschine verändert, was auch gegensinnig zur Austrageinrichtung erfolgen kann. Demnach wird die Austrageinrichtung selbsttätig konstant auf eine bestimmte Position auf dem Ladebehälter ausgerichtet. Der Fahrer der Erntemaschine wird aber nicht von der Aufgabe entlastet, den sich ansammelnden Schüttgutkegel des Ernteguts auf dem Ladebehälter zu beobachten, und ggf. die Austrageinrichtung in eine neue Stellung zu verbringen.

Die EP 1 645 178 A schlägt vor, die Austrageinrichtung eines Feldhäckslers entlang einer definierten Geometrie zu führen, bei der es sich um eine in Längsmittenrichtung des Ladebehälters verlaufende Gerade oder Kurvenbahn handeln kann. Ein Wechsel der Position der Austrageinrichtung erfolgt auf eine Eingabe des Bedieners hin entlang eines virtuellen Rasters, dessen Größe und Lage an die Größe des Lagebehälters angepasst werden kann oder durch eine automatische Steuerung, die eine Regelschleife durchläuft.

In den Veröffentlichungen "Assistenzsystem zur Überladung landwirtschaftlicher Güter" von G. Wallmann und H.-H. Harms, Landtechnik 2002, Seiten 352 und 353, sowie "Häckselgut automatisch überladen" von A. Böhrnsen, Profi 11/2006, Seiten 84 bis 86, wird vorgeschlagen, durch die Austrageinrichtung eine Beladestrategie durchzuführen, die durch eine getaktete Ausrichtung auf verschiedene Zielbereiche eine gleichmäßige und vollständige Beladung des Transportanhängers bewirkt. Dazu können die Austrageinrichtung und ihre Auswurfklappe entlang eines Zickzackmusters geführt werden, oder es wird nur die Auswurfklappe kontinuierlich hin und her geschwenkt, während das Transportfahrzeug durch seinen Fahrer nach und nach weiter nach vorn oder hinten bewegt wird. Hier ist keine Überwachung des Ladebehälters durch den Fahrer mehr erforderlich, da die Steuerung der Austrageinrichtung völlig automatisiert erfolgt. Allerdings wird durch die fest vorgegebene Beladestrategie nicht berücksichtigt, dass die jeweils geeigneteste Befüllweise auch von der Art des Transportfahrzeugs abhängen kann. So sind Lastwagen mit angetriebenen Hinterachsen zunächst oberhalb der Hinterachse zu beladen, während Sattelschlepper hingegen zunächst im vorderen Bereich des Aufliegers zu beladen sind, um die Traktionsfähigkeit sicherzustellen. Im Stand der Technik wird auch nicht die Form des Geländes berücksichtigt, die bei seitlichen oder in Fahrtrichtung vorliegenden Neigungen auch einen Einfluss auf die jeweils beste Beladestrategie haben kann.

### Aufgabe der Erfindung

Die der Erfindung zu Grunde liegende Aufgabe wird darin gesehen, eine Steueranordnung zur Kontrolle des Überladens landwirtschaftlichen Ernteguts von einer Erntemaschine auf ein einen Ladebehälter umfassendes Transportfahrzeug bereitzustellen, die sich flexibel an die Art des Transportfahrzeugs und/oder die jeweiligen Arbeitsbedingungen anpassen lässt.

### Lösung

Diese Aufgabe wird erfindungsgemäß durch die Lehre der Patentansprüche 1 und 12 gelöst, wobei in den weiteren Patentansprüchen Merkmale aufgeführt sind, die die Lösung in vorteilhafter Weise weiterentwickeln.

Eine Steueranordnung dient zur Kontrolle des Überladens landwirtschaftlichen Ernteguts von einer Austrageinrichtung einer selbstfahrenden oder angebauten oder gezogenen Erntemaschine auf den Ladebehälter eines Transportfahrzeugs. Die Steueranordnung beeinflusst während des Emtebetriebs die Position des Abgabeendes der Austrageinrichtung und/oder die Auswurfrichtung der Austrageinrichtung und/oder die Position des Transportfahrzeugs gegenüber der Erntemaschine. Letzteres erfolgt, indem sie Lenk- und/oder Geschwindigkeitssignale an eine Lenk- bzw. Geschwindigkeitsvorgabeeinrichtung des Transportfahrzeugs oder eine geeignete Anzeige auf dem Transportfahrzeug oder der Erntemaschine übersendet, anhand derer der Fahrer des Transportfahrzeug letzteres lenkt bzw. dessen Geschwindigkeit kontrolliert. Dabei wird das Erntegut durch die Steueranordnung selbsttätig gemäß einer vorbestimmten Beladestrategie, die in einer Speichereinrichtung abgelegt ist, sukzessive an unterschiedlichen Stellen des Ladebehälters abgelegt. Die Beladestrategie ist abhängig von der Position der angetriebenen Räder des Transportfahrzeugs unter unterschiedlichen Beladestrategien auswählbar, um beispielsweise den Auflieger eines Sattelschleppers zuerst im vorderen Bereich zu beladen, in dem sich die angetriebenen Achsen befinden, während ein Lastwagen mit angetriebener Hinterachse zunächst im Bereich oberhalb der Hinterachse beladen wird. Analog wird bei einer Zugmaschine mit zwei Anhängern zuerst der vordere Anhänger beladen.

Auf diese Weise kann eine verbesserte oder optimierte Anpassung der Beladestrategie an die jeweiligen Umstände des Befüllvorgangs erfolgen. Eine Erfassung der Höhe des Ernteguts auf dem Ladebehälter ist nicht erforderlich, obwohl sie grundsätzlich möglich wäre.

Weiterhin kann die Beladestrategie die maximale Belastung des Transportfahrzeugs berücksichtigen, um eine Überlastung zu verhindern. Die maximale Belastung (und damit die den einzelnen Stellen des Ladebehälters zugeordnete Überladezeit und die nach Abschluss der Beladung des Ladebehälters darauf abgelegte Erntegutmenge) kann von Eigenschaften, insbesondere Abmessungen des Transportfahrzeugs und/oder gesetzlichen Vorgaben abhängen. Auch kann die mögliche Gewichtsverteilung auf dem Transportfahrzeug berücksichtigt werden, so dass ggf. mehr Erntegut in der Nähe von Achsen abgelegt werden kann als in anderen Bereichen des Ladebehälters. Außerdem kann die Beladestrategie von Bodeneigenschaften des befahrenen Geländes abhängen, beispielsweise von der Traktions- und/oder Tragfähigkeit des Bodens. Dadurch kann man vermeiden, dass die Räder des Transportfahrzeugs durch zu hohe Beladung durchdrehen oder im Boden einsinken. Die Bodeneigenschaften können in einer geeigneten, der Steuereinrichtung zugänglichen elektronischen Karte abgespeichert sein und mittels einer Positionsbestimmungseinrichtung (z. B. GPS-Antenne) abgerufen werden.

Die von der Steuereinrichtung genutzten Informationen hinsichtlich der Eigenschaften des Transportfahrzeugs (z. B. Art des Transportfahrzeugs wie Sattelschlepper oder Lastwagen oder Zugmaschine und Zahl der gezogenen Anhänger, Position der angetriebenen Achse oder Achsen, Abmessungen des Ladebehälters, maximale Belastung, mögliche Gewichtsverteilung, Traktionsvermögen auf unterschiedlichen Böden) können in einer einfachen Ausführungsform der Erfindung der Steuereinrichtung durch den Bediener mittels einer Eingabeeinrichtung zugeführt werden. Die entsprechenden Daten werden eingetippt oder durch Eingabeknöpfe eingestellt oder aus Menüs ausgewählt. Bei einer anderen Ausführungsform werden die Informationen durch geeignete Speichermittel und Sendeeinrichtungen vorn Transportfahrzeug auf die Erntemaschine übertragen. Dazu kann eine Datenübertragung per Funk oder auf optischem Wege vorgesehen sein, oder das Transportfahrzeug weist einen Strichcode, einen Transponderchip oder einen RFID-Chip auf, der durch die Steueranordnung ausgelesen werden kann. Basierend auf diesen Informationen ändert oder wählt die Steueranordnung die jeweils geeignetste Beladestrategie aus oder ändert sie ab.

Die Beladestrategie kann weiterhin von der Neigung des Geländes in Fahrtrichtung der Erntemaschine und/oder in seitlicher Richtung abhängen. Die Neigung wird mittels eines an Bord der Erntemaschine befindlichen Neigungssensors erfasst und/oder anhand der jeweiligen, mit einer Positionsbestimmungseinrichtung erfassten Position und Fahrtrichtung der Erntemaschine aus einer Karte ausgelesen. Die Beladestrategie wird dafür sorgen, dass die Austrageinrichtung die jeweils hangauf liegenden Bereiche des Ladebehälters stärker befüllt als seine hangabwärts liegenden Bereiche, um zu verhindern, dass Erntegut auf den Boden fällt. Wenn der Erntevorgang nach einem im Voraus geplanten Wegplan erfolgt, ist die während des zurückzulegenden Weges zu erwartende Neigung bereits bekannt, so dass die Beladestrategie vorausschauend an die zu erwartende Neigung angepasst werden kann.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer selbstfahrenden Erntemaschine und eines Transportfahrzeugs,
- Fig. 2: eine schematische Draufsicht auf die Erntemaschine und das Transportfahrzeug, die gemeinsam auf einem Feld einen Ernte- und Überladevorgang durchführen,
- Fig. 3: eine schematische Darstellung der Positionsbestimmungseinrichtungen der beiden Fahrzeuge sowie der damit zusammenwirkenden Elemente, und
- Fig. 4: ein Flussdiagramm, nach dem die Kontrolleinheit der Erntemaschine arbeitet.

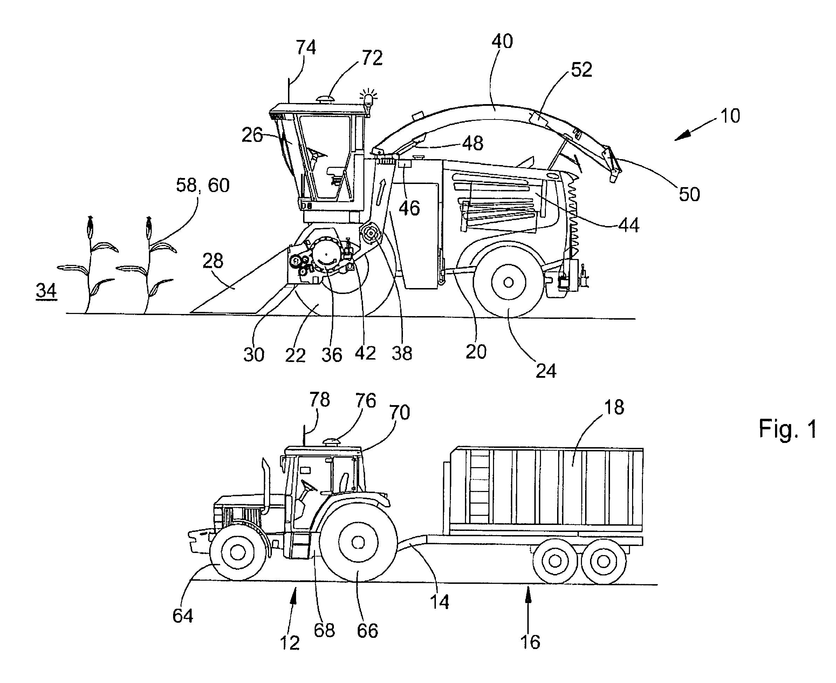

Eine in der Figur 1 dargestellte Kombination zweier landwirtschaftlicher Maschinen umfasst eine Erntemaschine 10 in der Art eines selbstfahrenden Feldhäckslers und einen Transportfahrzeug 12 in der Art eines selbstfahrenden Traktors, der mittels einer Deichsel 14 einen Anhänger 16 zieht, der einen Ladebehälter 18 umfasst.

Die Erntemaschine 10 baut sich auf einem Rahmen 20 auf, der von vorderen angetriebenen Rädern 22 und lenkbaren rückwärtigen Rädern 24 getragen wird. Die Bedienung der Erntemaschine 10 erfolgt von einer Fahrerkabine 26 aus, von der aus ein Emtevorsatz 28 in Form eines Maismähvorsatzes sichtbar ist, der an einem Einzugskanal 30 an der Frontseite des Feldhäckslers 10 befestigt ist. Mittels des Erntevorsatzes 28 von einem Feld 34 aufgenommenes Erntegut wird über einen im Einzugskanal 30 angeordneten Einzugsförderer mit Vorpresswalzen einer Häckseltrommel 36 zugeführt, die es in kleine Stücke häckselt und es einem Gebläse 38 aufgibt. Zwischen der Häckseltrommel 36 und dem Gebläse 38 erstreckt sich eine Nachzerkleinerungsvorrichtung 42 mit zwei Körnerprozessorwalzen. Der Antrieb der erwähnten, antreibbaren Aggregate der Erntemaschine 10 und des Erntevorsatzes 28 erfolgt mittels eines Verbrennungsmotors 44. Das vorn Gebläse 38 abgegebene Gut verlässt die Erntemaschine 10 zu dem nebenher fahrenden Ladebehälter 18 über eine mittels eines ersten, fremdkraftbetätigten Aktors 46 um eine etwa vertikale Achse drehbaren und mittels eines zweiten, fremdkraftbetätigten Aktors 48 in der Neigung verstellbare Austrageinrichtung 40 in Form eines Auswurfkrümmers, deren Abwurfrichtung durch eine Klappe 50 veränderbar ist, deren Neigung mittels eines dritten, fremdkraftbetätigten Aktors 52 verstellbar ist.

Das Transportfahrzeug 12 und der Anhänger 16 sind konventionellen Aufbaus. Das Transportfahrzeug 12 umfasst vordere lenkbare Räder 64 und rückwärtige angetriebene Räder 66, die an einem Rahmen 68 abgestützt sind, der eine Fahrerkabine 70 trägt.

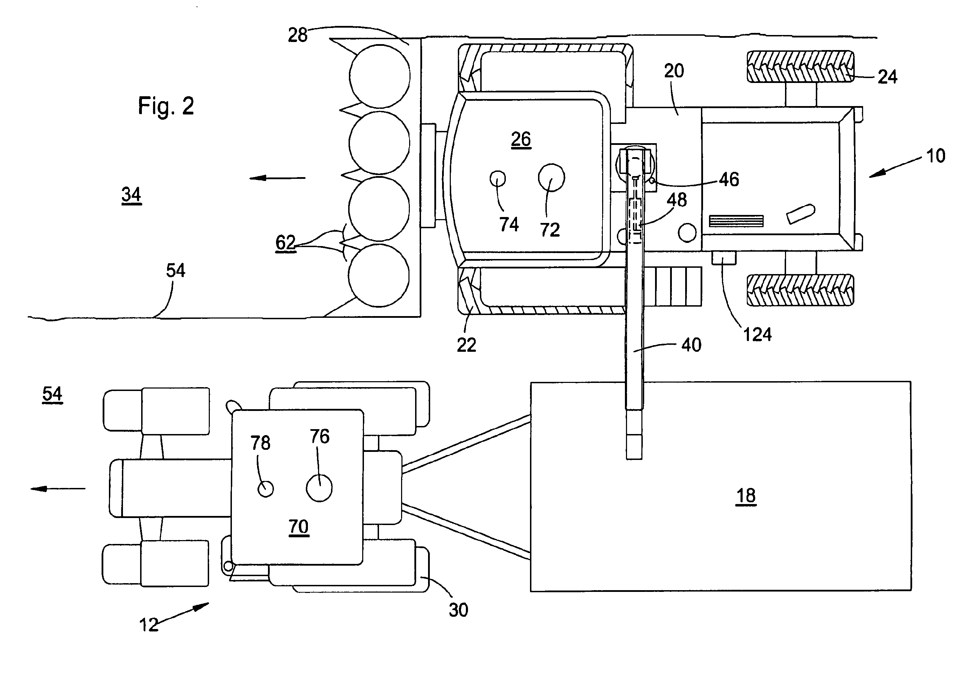

In der Figur 2 sind die Erntemaschine 10 und das Transportfahrzeug 12 in einer Draufsicht wiedergegeben. Es ist erkennbar, dass die Erntemaschine 10 entlang einer Erntegutkante 54 fährt, die eine Grenze zwischen dem abgeernteten Bereich 56 des Felds 34 und dem noch stehenden, mit Maispflanzen 58 besetzten Bestand 60 des Felds 34 darstellt, und die die Pflanzen 58 aberntet. Das Transportfahrzeug 12 fährt auf dem abgeernteten Teil 56 des Felds parallel zur Erntemaschine 10 entlang eines Weges, auf dem die von der Erntemaschine 10 gehäckselten Pflanzen durch die Austrageinrichtung 40 in den Ladebehälter 18 gelangen. Das Transportfahrzeug 12 muss daher stets parallel neben der Erntemaschine 10 herfahren; insbesondere beim Einfahren in das Feld kann das Transportfahrzeug 12 aber auch hinter der Erntemaschine 10 herfahren, da noch kein abgeernteter Teil 56 des Feldes 34 vorliegt, auf dem das Transportfahrzeug 12 fahren könnte, ohne die dort stehenden Pflanzen zu beschädigen.

Die Erntemaschine 10 wird durch einen in der Fahrerkabine 18 sitzenden Fahrer oder durch eine an sich bekannte, selbsttätig arbeitende Lenkvorrichtung gelenkt. Das Transportfahrzeug 12 ist ebenfalls mit einer im Folgenden näher beschriebenen Lenkeinrichtung ausgestattet, um das Parallelfahren zur Erntemaschine 10 zu erleichtern bzw. automatisieren. Die Erntemaschine 10 könnte auch eine beliebige andere selbstfahrende Erntemaschine sein, wie ein Mähdrescher oder Rübenemter.

Die Erntemaschine 10 ist mit einer ersten Positionsbestimmungseinrichtung 72 ausgestattet, die sich auf dem Dach der Kabine 26 befindet. Dort ist auch eine erste Radioantenne 74 positioniert. Das Transportfahrzeug 12 ist mit einer zweiten Positionsbestimmungseinrichtung 76 ausgestattet, die sich auf dem Dach der Kabine 70 befindet. Dort ist auch eine zweite Radioantenne 78 positioniert.

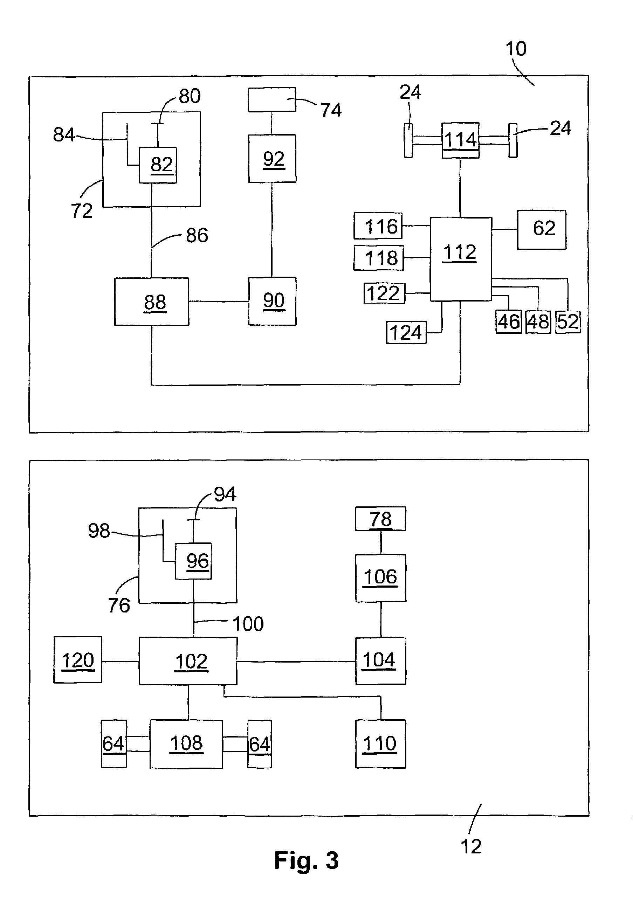

Nunmehr wird auf die Figur 3 Bezug genommen, in der die einzelnen Komponenten der Positionsbestimmungseinrichtungen 72, 76 und die Lenkeinrichtungen des Transportfahrzeugs 12 und der Erntemaschine 10 schematisch dargestellt sind. An Bord der Erntemaschine 10 befindet sich die erste Positionsbestimmungseinrichtung 76, die eine Antenne 80 und eine mit der Antenne 80 verbundene Auswertungsschaltung 82 umfasst. Die Antenne 80 empfängt Signale von Satelliten eines Positionsbestimmungssystems, wie GPS, Galileo oder Glonass, die der Auswertungsschaltung 82 zugeführt werden. Anhand der Signale der Satelliten bestimmt die Auswertungsschaltung 82 die aktuelle Position der Antenne 80. Die Auswertungsschaltung 82 ist weiterhin mit einer Korrekturdatenempfangsantenne 84 verbunden, die von Referenzstationen an bekannten Standorten ausgestrahlte Radiowellen empfängt. Anhand der Radiowellen werden von der Auswertungsschaltung 82 Korrekturdaten zur Verbesserung der Genauigkeit der Positionsbestimmungseinrichtung 72 erzeugt.

Die Auswertungsschaltung 82 übersendet durch eine Busleitung 86 ihre Positionsdaten an eine Rechnereinrichtung 88. Die Rechnereinrichtung 88 ist über eine Schnittstelle 90 mit einer Empfangs- und Sendeeinrichtung 92 verbunden, die wiederum mit der Radioantenne 74 verbunden ist. Die Empfangs- und Sendeeinrichtung 92 empfängt und erzeugt Radiowellen, die von der Antenne 74 aufgenommen bzw. abgestrahlt werden.

Analog befindet sich an Bord des Transportfahrzeugs 12 die zweite Positionsbestimmungseinrichtung 76, die eine Antenne 94 und eine mit der Antenne 94 verbundene Auswertungsschaltung 96 umfasst. Die Antenne 94 empfängt Signale von Satelliten desselben Positionsbestimmungssystems wie die Antenne 80, die der Auswertungsschaltung 96 zugeführt werden. Anhand der Signale der Satelliten bestimmt die Auswertungsschaltung 96 die aktuelle Position der Antenne 94. Die Auswertungsschaltung 96 ist weiterhin mit einer Korrekturdatenempfangsantenne 98 verbunden, die von Referenzstationen an bekannten Standorten ausgestrahlte Radiowellen empfängt. Anhand der Radiowellen werden von der Auswertungsschaltung 96 Korrekturdaten zur Verbesserung der Genauigkeit der Positionsbestimmungseinrichtung 76 erzeugt.

Die Auswertungsschaltung 96 übersendet durch eine Busleitung 100 ihre Positionsdaten an eine Rechnereinrichtung 102. Die Rechnereinrichtung 102 ist über eine Schnittstelle 104 mit einer Empfangs- und Sendeeinrichtung 106 verbunden, die wiederum mit der Radioantenne 78 verbunden ist. Die Empfangs- und Sendeeinrichtung 106 empfängt und erzeugt Radiowellen, die von der Antenne 78 aufgenommen bzw. abgestrahlt werden. Durch die Empfangs- und Sendeeinrichtungen 90, 106 und die Radioantennen 74, 78 können Daten von der Rechnereinrichtung 88 an die Rechnereinrichtung 102 und umgekehrt übermittelt werden. Die Verbindung zwischen den Radioantennen 74, 78 kann direkt sein, z. B. in einem zugelassenen Funkbereich wie CB-Funk o. ä., oder über eine oder mehrere Relaisstationen bereitgestellt werden, beispielsweise wenn die Empfangs- und Sendeeinrichtungen 90, 106 und die Radioantennen 74, 78 nach dem GSM-Standard oder einem anderen geeigneten Standard für Mobiltelefone arbeiten.

Die Rechnereinrichtung 102 ist mit einer Lenkeinrichtung 108 verbunden, welche den Lenkwinkel der vorderen, lenkbaren Räder 64 steuert. Außerdem übersendet die Rechnereinrichtung 102 Geschwindigkeitssignale an eine Geschwindigkeitsvorgabeeinrichtung 110, die über eine Variation der Motordrehzahl des Transportfahrzeugs 12 und/oder der Getriebeübersetzung die Geschwindigkeit des Transportfahrzeugs 12 kontrolliert. Außerdem ist die Rechnereinrichtung 102 mit einem permanenten Speicher 120 verbunden.

An Bord der Erntemaschine 10 ist die Rechnereinrichtung 88 mit einer Kontrolleinheit 112 verbunden, die gemeinsam mit den von ihr kontrollierten Aktoren und den mit ihr verbundenen Sensoren eine Steueranordnung zur Kontrolle des Überladens des Ernteguts von der Erntemaschine 10 auf den Ladebehälter 18 des Transportfahrzeugs 12 bildet. Letztere ist mit einer Lenkeinrichtung 114 verbunden, welche den Lenkwinkel der rückwärtigen, lenkbaren Räder 24 steuert. Außerdem übersendet die Kontrolleinheit 112 Geschwindigkeitssignale an eine Geschwindigkeitsvorgabeeinrichtung 116, die über eine Variation der Getriebeübersetzung die Geschwindigkeit des Transportfahrzeugs 12 kontrolliert. Die Kontrolleinheit 112 ist weiterhin mit einem Durchsatzsensor 118, der den Abstand zwischen den Vorpresswalzen im Einzugskanal erfasst, mit einem Sensor zur Erfassung der Position von an einer Teilerspitze des Erntevorsatzes 28 angebrachten Tastbügeln 62, einem permanenten Speicher 122 und mit den Aktoren 46, 48 und 50 verbunden.

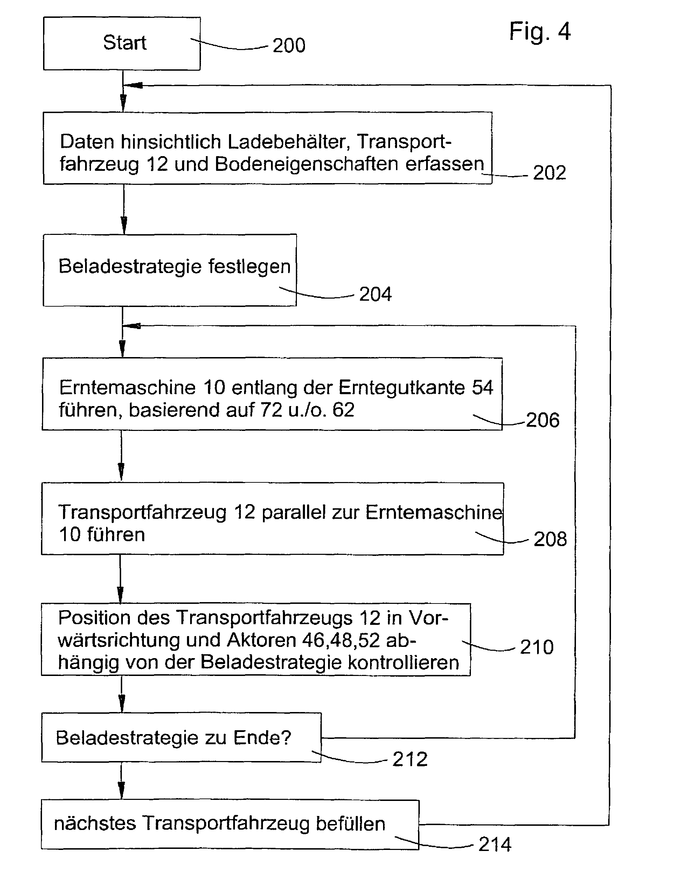

In der Figur 4 ist ein Flussdiagramm dargestellt, nach dem die Kontrolleinheit 112 der Erntemaschine 10 während des Emtebetriebs vorgeht.

Nach dem Start im Schritt 200 folgt der Schritt 202, in dem die Kontrolleinheit 112 die Rechnereinrichtung 88 veranlasst, von der Rechnereinrichtung 102 den Inhalt des Speichers 120 abzufragen. Darin sind Daten beispielsweise hinsichtlich der Motorleistung des Transportfahrzeugs 12, seiner Art (hier: Zugmaschine bzw. Traktor) und der Bereifung (Breite, Durchmesser, Profilgröße) enthalten. Weiterhin erhält die Rechnereinrichtung 102 durch Eingabe eines Bedieners in eine Eingabeeinrichtung Daten hinsichtlich der Abmessungen des Ladebehälters 18 und der Tragfähigkeit des Anhängers 16. Diese Daten könnten auch im Speicher 120 enthalten sein, oder im Speicher 122 sind derartige Daten für verschiedene Anhänger 16 abgespeichert, und können durch den Fahrer der Erntemaschine 10 oder mittels eines Barcodelesers 124, der geeignete Markierungen am Anhänger 16 oder an der Außenwand des Ladebehälters 18 erfasst, ausgewählt werden. Der Barcodeleser 124 könnte auch durch einen RFID- oder Transponderchipleser (nicht gezeigt) ersetzt werden, der am Anhänger 16 oder am Ladebehälter 18 angebrachte RFID- oder Transponderchips lesen kann. Diese Chips enthalten die erwähnten Daten hinsichtlich der Abmessungen des Ladebehälters 18 und der Tragfähigkeit des Anhängers 16 oder (analog zum Barcode) nur Identifikationsdaten, aus denen die erwähnten Daten aus dem Speicher 122 ausgelesen werden können. Weiterhin erhält die Kontrolleinheit 112 noch Daten hinsichtlich der Bodeneigenschaften. Dabei handelt es sich um die seitliche Neigung und die Neigung des Bodens in Vorwärtsrichtung, und um Daten hinsichtlich der Traktionseigenschaften des Bodens (z. B. ob es sich um losen Sandboden oder relativ festen Boden oder um feuchten Boden handelt). Diese Daten hinsichtlich der Bodeneigenschaften werden aus einer im Speicher 122 abgelegten Karte anhand eines für den kommenden Erntevorgang geplanten, im Speicher 122 abgelegten Weges ausgelesen.

Im nachfolgenden Schritt 204 wird die Beladestrategie festgelegt, anhand der der Ladebehälter 128 befüllt werden soll. Die Beladestrategie definiert die Positionen und zugehörigen Zeitdauern, auf die die Austrageinrichtung 40 das Erntegut abladen wird. Dabei werden die horizontalen und vertikalen Abmessungen des Ladebehälters 18 und seine Tragfähigkeit berücksichtigt, wobei die Dichte des Ernteguts aus Erfahrungswerten abgeleitet oder durch geeignete Sensoren gemessen werden kann. Außerdem wird die Art des Transportfahrzeugs 12 berücksichtigt. Im hier dargestellten Fall wird die Beladung des Ladebehälters 18 zuerst in seinem vorderen Bereich erfolgen, um über die Deichsel 14 eine hinreichende Belastung der rückwärtigen, angetriebenen Räder 66 des Transportfahrzeugs 12 sicherzustellen. Ein Lastwagen mit angetriebener Hinterachse und darüber angeordnetem Ladebehälter (nicht gezeigt) würde hingegen zuerst in rückwärtigen Bereich gefüllt werden. Die Motorleistung des Transportfahrzeugs 12, die Daten hinsichtlich der Bereifung und der Traktionseigenschaften des Bodens gehen in die beabsichtigte Füllhöhe des Ernteguts im Ladebehälter 18 ein, um in ungünstigen Fällen ein Einsinken der Räder 66 in den Boden oder Durchdrehen zu vermeiden. Die Neigung des Bodens geht ebenfalls in die Beladestrategie ein, um die hangauf gelegene Seite des Ladebehälters 18 jeweils höher als die hangab gelegene Seite zu befüllen. Die im Schritt 204 benötigten Daten wurden im Schritt 202 der Kontrolleinheit 112 zugeführt. Die Beladestrategie kann vorsehen, dass der Ladebehälter 18 entsprechend definierter Muster befüllt wird, die einmal oder mehrmals abgefahren werden. Beispiele für derartige Muster sind in Vorwärtsrichtung verlaufende Streifen entlang der Mitte des Ladebehälters oder sich von vorn nach hinten erstreckende Zickzackmuster. Es sind aber beliebige andere Muster denkbar. Bei einer möglichen Ausführungsform der vorliegenden Erfindung sind zwei grundsätzliche, unterschiedliche Beladestrategien abgespeichert, von denen die eine vorn und die andere hinten mit der Beladung des Ladebehälters 18 anfängt, und die anhand der Art des Transportfahrzeugs bzw. der Lage seiner angetriebenen Räder ausgewählt werden. Die anderen, erwähnten Daten dienen dann zur Anpassung der ausgewählten Beladestrategie an die jeweiligen Arbeitsbedingungen.

Nachdem die Beladestrategie im Schritt 204 festgelegt und im Speicher 122 abgespeichert wurde, folgt der Schritt 206, in dem die Erntemaschine 10 entlang der Erntegutkante 54 gelenkt wird, indem die Kontrolleinheit 112 Lenksignale an die Lenkeinrichtung 114 gibt, die auf den Signalen von der Positionsbestimmungseinrichtung 72 und einer im Speicher 122 abgelegten Karte basieren, die einen für den kommenden Erntevorgang geplanten Weg definiert, oder auf Signalen von den Tastbügeln 62 oder einer Kombination aus beiden Signalen. Alternativ oder zusätzlich wird die Erntegutkante 54 mit einer zwei- oder dreidimensionalen Kamera und einem Bildverarbeitungssystem oder einem Laser- oder Ultraschallsensor oder -scanner erfasst und zur Erzeugung des Lenksignals für die Lenkeinrichtung 114 verwendet. Der Weg der Erntemaschine 10 muss nicht unbedingt schnurgerade verlaufen, sondern kann abhängig von der Form des Felds auch Kurven umfassen. Außerdem sind Wendevorgänge am Feldende vorgesehen.

Die Vortriebsgeschwindigkeit der Erntemaschine 10 kann durch ihren Fahrer vorgegeben werden, oder die Kontrolleinheit 112 verwendet die Durchsatzsignale des Durchsatzsensors 118, um die Geschwindigkeitsvorgabeeinrichtung 116 derart anzusteuern, dass ein gewünschter Durchsatz durch die Erntemaschine 10 erzielt wird.

Außerdem wird im Schritt 208 das Transportfahrzeug 12 parallel zur Erntemaschine 10 geführt, indem die Kontrolleinheit 112 über die Rechnereinrichtung 88 und die Radioantennen 74, 78 Daten hinsichtlich der von Transportfahrzeug 10 anzusteuernden Position an die Rechnereinrichtung 102 übersendet. Die Rechnereinrichtung 102 steuert dann die Lenkeinrichtung 108 und die Geschwindigkeitsvorgabeeinrichtung 110 entsprechend an, indem sie die mit der Positionsbestimmungseinrichtung 76 erfasste Position mit der anzusteuernden Position vergleicht und abhängig vorn Ergebnis des Vergleichs geeignete Lenksignale an die Lenkeinrichtung 108 gibt. Dieser Vergleich und die Erzeugung des Lenksignals für die Lenkeinrichtung 108 könnte auch durch die Rechnereinrichtung 88 und/oder die Kontrolleinheit 112 an Bord der Erntemaschine 10 erfolgen, wobei die Positionsdaten von der Positionsbestimmungseinrichtung 76 des Transportfahrzeugs über die Radioantennen 74, 78 auf die Erntemaschine 10 übertragen werden, während die Lenksignale in umgekehrter Richtung zurück auf das Transportfahrzeug 12 übersandt werden. Das Transportfahrzeug 12 folgt der Erntemaschine 10 auch beim Befahren von Kurven und beim Wenden am Feldende.

Im Schritt 210 werden die Aktoren 46, 48 und 52 zur Verstellung der Position des Abgabeendes der Austrageinrichtung 40 und der Abwurfrichtung entsprechend der im Schritt 204 geplanten Beladestrategie angesteuert, so dass der Ladebehälter 18 nach und nach in der geplanten Weise befüllt wird. Zusätzlich oder alternativ wird die Position des Transportfahrzeugs 12 in Vorwärtsrichtung und/oder in seitlicher Richtung gegenüber der Erntemaschine 10 variiert, indem die Kontrolleinheit 112 über die Rechnereinrichtung 88 und die Radioantennen 74, 78 entsprechende Daten hinsichtlich der von Transportfahrzeug 10 anzusteuernden Position an die Rechnereinrichtung 102 übersendet. Dadurch kann der Weg des Ernteguts zwischen dem Abgabeende der Austrageinrichtung 40 und dem Ladebehälter 18 relativ kurz gehalten werden, was die Vorteile hat, dass bei Wind wenig Erntegutverluste entstehen und das Erntegut auf dem Ladebehälter 18 vorverdichtet wird.

Es folgt dann der Schritt 212, in dem abgefragt wird, ob die Beladestrategie vollständig durchgeführt wurde. Ist das nicht der Fall, folgt wieder der Schritt 206. Anderenfalls folgt der Schritt 214. Da die Beladestrategie beendet ist, wird der Fahrer des Transportfahrzeugs 12 in diesem Schritt durch eine von der Kontrolleinheit 112 über die Rechnereinrichtungen 88, 102 an eine optisch oder akustisch arbeitende Informationseinrichtung (nicht gezeigt) veranlasst, die Kontrolle über das Transportfahrzeug 12 zu übernehmen und den Platz neben der Erntemaschine 10 zu räumen, um Platz für ein nachfolgendes Transportfahrzeug zu schaffen. Alternativ wird die Lenkeinheit 108 des Transportfahrzeugs 12 veranlasst, letzteres seitlich fortzubewegen, worauf hin der Fahrer des Transportfahrzeugs 12 die Kontrolle übernimmt. Das nachfolgende Transportfahrzeug 12 wird durch seinen Fahrer neben der Erntemaschine 10 positioniert und es folgt wieder der Schritt 202. Wenn dieser Schritt 202 für dasselbe Transportfahrzeug 12 zu wiederholen ist, kann die Kontrolleinheit 112 auch auf die bereits vorher abgespeicherte Beladestrategie zurückgreifen.

Es ist anzumerken, dass in einer vereinfachten Ausführungsform der Erfindung der Fahrer der Erntemaschine 10 diese lenkt und ihre Geschwindigkeit vorgibt, während der Fahrer des Transportfahrzeugs 12 dieses lenkt und seine Geschwindigkeit vorgibt. Die Kontrolleinheit 112 kontrolliert dann lediglich die Aktoren 46, 48 und 52 entsprechend einer manuell durch den Fahrer der Erntemaschine unter zumindest zwei verfügbaren Beladestrategien ausgewählten Beladestrategie, die vorzugsweise von der Position der angetriebenen Räder des Transportfahrzeugs 12 abhängt, wie oben erwähnt. Diese Beladestrategien können durch den Fahrer der Erntemaschine 10 manuell entsprechend der Größe des Ladebehälters 18 modifiziert werden, beispielsweise indem er anfangs die Austrageinrichtung 40 an der vorderen und hinteren Wand des Ladebehälters 18 positioniert.

## Patentansprüche

1. Kombination aus einer Erntemaschine (10), einem einen Ladebehälter (18) umfassenden Transportfahrzeug (12) und einer Steueranordnung zur Kontrolle des Überladens landwirtschaftlichen Ernteguts von der Erntemaschine (10) auf den Ladebehälter (18) des Transportfahrzeugs (12), wobei die Steueranordnung betreibbar ist, das Erntegut während des Erntebetriebs durch eine Austrageinrichtung (40) der Erntemaschine (10) einer vorbestimmten Beladestrategie folgend entsprechend definierter Muster, die einmal oder mehrmals abgefahren werden, selbsttätig sukzessive an unterschiedlichen Stellen des Ladebehälters (18) abzulegen, **dadurch gekennzeichnet, dass** die Beladestrategie abhängig von der Position der angetriebenen Räder (66) des Transportfahrzeugs (12) unter unterschiedlichen Beladestrategien auswählbar ist.

2. Kombination aus einer Erntemaschine (10), einem Transportfahrzeug (12) und einer Steueranordnung nach Anspruch 1, **dadurch gekennzeichnet, dass** die Beladestrategie vorsieht, dass der Ladebehälter (18) anfangs oberhalb der jeweils angetriebenen Räder (66) des Transportfahrzeugs (12) befüllt wird.

3. Kombination aus einer Erntemaschine (10), einem Transportfahrzeug (12) und einer Steueranordnung nach einem der Ansprüche 1 oder 2, **dadurch gekennzeichnet, dass** die Beladestrategie eine maximale Belastung und/oder eine mögliche Gewichtsverteilung des Transportfahrzeugs (12) berücksichtigt.

4. Kombination aus einer Erntemaschine (10), einem Transportfahrzeug (12) und einer Steueranordnung nach Anspruch 3, **dadurch gekennzeichnet, dass** die maximale Belastung und/oder mögliche Gewichtsverteilung des Transportfahrzeugs (12) von Eigenschaften des Transportfahrzeugs (12) und/oder gesetzlichen Vorschriften und/oder Bodeneigenschaften des befahrenen Geländes abhängt.

5. Kombination aus einer Erntemaschine (10), einem Transportfahrzeug (12) und einer Steueranordnung nach Anspruch 4, **dadurch gekennzeichnet, dass** die Steueranordnung betreibbar ist, die Bodeneigenschaften anhand einer Positionsbestimmungseinrichtung (72) aus einer Karte zu entnehmen.

6. Kombination aus einer Erntemaschine (10), einem Transportfahrzeug (12) und einer Steueranordnung nach einem der Ansprüche 1 bis 5, **dadurch gekennzeichnet, dass** die Beladestrategie durch eine Bedienereingabe und/oder eine automatische Erfassung von Informationen hinsichtlich des Transportfahrzeugs (12) veränderbar und/oder auswählbar ist.

7. Kombination aus einer Erntemaschine (10), einem Transportfahrzeug (12) und einer Steueranordnung (104) nach Anspruch 6, **dadurch gekennzeichnet, dass** die automatische Erfassung von Informationen hinsichtlich des Transportfahrzeugs (12) über elektromagnetische Wellen erfolgt.

8. Kombination aus einer Erntemaschine (10), einem Transportfahrzeug (12) und einer Steueranordnung nach Anspruch 7, **dadurch gekennzeichnet, dass** am Transportfahrzeug ein Barcode oder ein Sender (106) oder ein Transponder- oder RFID-Chip angebracht ist, der durch die Steuereinrichtung empfang- oder lesbar ist.

9. Kombination aus einer Erntemaschine (10), einem Transportfahrzeug (12) und einer Steueranordnung nach einem der Ansprüche 1 bis 8, **dadurch gekennzeichnet, dass** die Beladestrategie die Neigung des Geländes berücksichtigt.

10. Kombination aus einer Erntemaschine (10), einem Transportfahrzeug (12) und einer Steueranordnung nach Anspruch 9, **dadurch gekennzeichnet, dass** die Neigung des Geländes durch einen an der Erntemaschine (10) angebrachten Neigungssensor und/oder anhand einer Karte und einer Positionsbestimmungseinrichtung (72) ermittelbar ist.

11. Kombination aus einer Erntemaschine (10), einem Transportfahrzeug (12) und einer Steueranordnung nach einem der Ansprüche 1 bis 10, **dadurch gekennzeichnet, dass** sie betreibbar ist, die Position des Abgabeendes der Austrageinrichtung (40) gegenüber der Erntemaschine (10) und/oder Auswurfrichtung der Austrageinrichtung (40) und/oder die Position des Transportfahrzeugs (12) gegenüber der Erntemaschine (10) zu verändern.

12. Verfahren zum Überladen landwirtschaftlichen Ernteguts von einer Erntemaschine (10) auf ein einen Ladebehälter (18) umfassendes Transportfahrzeug (12), wobei das Erntegut während des Emtebetriebs durch eine Austrageinrichtung (40) der Erntemaschine (10) einer vorbestimmten Beladestrategie folgend selbsttätig entsprechend definierter Muster, die einmal oder mehrmals abgefahren werden, sukzessive an unterschiedlichen Stellen des Ladebehälters (18) abgelegt wird, **dadurch gekennzeichnet, dass** die Beladestrategie abhängig von der Position der angetriebenen Räder (66) des Transportfahrzeugs (12) unter unterschiedlichen Beladestrategien ausgewählt wird.

## Claims

1. Combination of a harvesting machine (10), a transport vehicle (12) comprising a loading container (18), and a control arrangement for controlling the transfer of agricultural crop from the harvesting machine (10) to the loading container (18) of the transport vehicle (12), the control arrangement being able to be operated to automatically deposit the crop during the harvesting mode successively at different points in the loading container (18), following a predetermined loading strategy according to defined patterns, which are covered once or repeatedly, by means of a discharging device (40) of the harvesting machine (10), **characterized in that** the loading strategy is able to be selected between different loading strategies depending on the position of the driven wheels (66) of the transport vehicle (12).

2. Combination of a harvesting machine (10), a transport vehicle (12) and a control arrangement according to Claim 1, **characterized in that** the loading strategy provides that the loading container (18) is initially filled above the respective driven wheels (66) of the transport vehicle (12).

3. Combination of a harvesting machine (10), a transport vehicle (12) and a control arrangement according to either of Claims 1 and 2, **characterized in that** the loading strategy takes into account a maximum load and/or a potential weight distribution of the transport vehicle (12).

4. Combination of a harvesting machine (10), a transport vehicle (12) and a control arrangement according to Claim 3, **characterized in that** the maximum load and/or potential weight distribution of the transport vehicle (12) depends on properties of the transport vehicle (12) and/or statutory requirements and/or ground conditions of the terrain which is driven on.

5. Combination of a harvesting machine (10), a transport vehicle (12) and a control arrangement according to Claim 4, **characterized in that** the control arrangement may be operated to extract the ground conditions from a card using a position determining device (72).

6. Combination of a harvesting machine (10), a transport vehicle (12) and a control arrangement according to one of Claims 1 to 5, **characterized in that** the loading strategy may be altered and/or may be selected by the input from an operator and/or automatic detection of information regarding the transport vehicle (12).

7. Combination of a harvesting machine (10), a transport vehicle (12) and a control arrangement (104) according to Claim 6, **characterized in that** the automatic detection of information regarding the transport vehicle (12) takes place via electromagnetic waves.

8. Combination of a harvesting machine (10), a transport vehicle (12) and a control arrangement according to Claim 7, **characterized in that** a barcode or a transmitter (106) or a transponder chip or RFID chip is attached to the transport vehicle, which may be received or read by the control device.

9. Combination of a harvesting machine (10), a transport vehicle (12) and a control arrangement according to one of Claims 1 to 8, **characterized in that** the loading strategy takes into account the inclination of the terrain.

10. Combination of a harvesting machine (10), a transport vehicle (12) and a control arrangement according to Claim 9, **characterized in that** the inclination of the terrain may be detected by an inclination sensor attached to the harvesting machine (10) and/or using a card and a position determining device (72).

11. Combination of a harvesting machine (10), a transport vehicle (12) and a control arrangement according to one of Claims 1 to 10, **characterized in that** it may be operated to alter the position of the discharge end of the discharging device (40) relative to the harvesting machine (10) and/or direction of ejection of the discharging device (40) and/or the position of the transport vehicle (12) relative to the harvesting machine (10).

12. Method for transferring agricultural crop from a harvesting machine (10) to a transport vehicle (12) comprising a loading container (18), the harvested crop being automatically deposited during the harvesting mode successively at different points in the loading container (18), following a predetermined loading strategy according to defined patterns, which are covered once or repeatedly, by means of a discharging device (40) of the harvesting machine (10), **characterized in that** the loading strategy is selected between different loading strategies depending on the position of the driven wheels (66) of the transport vehicle (12).

## Revendications

1. Combinaison d'une machine de récolte (10), d'un véhicule de transport (12) comprenant un contenant (18) et d'un agencement de commande pour contrôler le transfert de produit de récolte agricole de la machine de récolte (10) au contenant (18) du véhicule de transport (12), l'agencement de commande pouvant être commandé de manière à déposer automatiquement et successivement en différents emplacements du contenant (18) le produit de récolte pendant la récolte, par un dispositif de décharge (40) de la machine de récolte (10), en suivant une stratégie de chargement prédéterminée en fonction de modèles définis qui peuvent être suivis une fois ou plusieurs fois, **caractérisée en ce que** la stratégie de chargement peut être sélectionnée parmi différentes stratégies de chargement en fonction de la position des roues motrices (66) du véhicule de transport (12).

2. Combinaison d'une machine de récolte (10), d'un véhicule de transport (12) et d'un agencement de commande selon la revendication 1, **caractérisée en ce que** la stratégie de chargement prévoit que le contenant (18) soit rempli au début au-dessus des roues motrices respectives (66) du véhicule de transport (12).

3. Combinaison d'une machine de récolte (10), d'un véhicule de transport (12) et d'un agencement de commande selon l'une quelconque des revendications 1 ou 2, **caractérisée en ce que** la stratégie de chargement tient compte d'un chargement maximum et/ou d'une distribution possible du poids du véhicule de transport (12).

4. Combinaison d'une machine de récolte (10), d'un véhicule de transport (12) et d'un agencement de commande selon la revendication 3, **caractérisée en ce que** le chargement maximum et/ou la distribution de poids possible du véhicule de transport (12) dépendent de propriétés du véhicule de transport (12) et/ou de prescriptions légales et/ou de caractéristiques du sol du terrain parcouru.

5. Combinaison d'une machine de récolte (10), d'un véhicule de transport (12) et d'un agencement de commande selon la revendication 4, **caractérisée en ce que** l'agencement de commande peut être commandé de manière à obtenir les propriétés du sol à l'aide d'un dispositif de détermination de position (72) à partir d'une carte.

6. Combinaison d'une machine de récolte (10), d'un véhicule de transport (12) et d'un agencement de commande selon l'une quelconque des revendications 1 à 5, **caractérisée en ce que** la stratégie de chargement peut être modifiée et/ou sélectionnée par une saisie d'un opérateur et/ou par une obtention automatique d'informations relatives au véhicule de transport (12).

7. Combinaison d'une machine de récolte (10), d'un véhicule de transport (12) et d'un agencement de commande (104) selon la revendication 6, **caractérisée en ce que** l'obtention automatique d'informations relatives au véhicule de transport (12) s'effectue par le biais d'ondes électromagnétiques.

8. Combinaison d'une machine de récolte (10), d'un véhicule de transport (12) et d'un agencement de commande selon la revendication 7, **caractérisée en ce qu'**un code à barres ou un émetteur (106) ou une puce à transpondeur ou une puce RFID sont appliqués sur le véhicule de transport, lesquels peuvent être reçus ou lus par le dispositif de commande.

9. Combinaison d'une machine de récolte (10), d'un véhicule de transport (12) et d'un agencement de commande selon l'une quelconque des revendications 1 à 8, **caractérisée en ce que** la stratégie de chargement tient compte de la pente du terrain.

10. Combinaison d'une machine de récolte (10), d'un véhicule de transport (12) et d'un agencement de commande selon la revendication 9, **caractérisée en ce que** la pente du terrain peut être déterminée par un capteur d'inclinaison monté sur la machine de récolte (10) et/ou à l'aide d'une carte et d'un dispositif de détermination de position (72).

11. Combinaison d'une machine de récolte (10), d'un véhicule de transport (12) et d'un agencement de commande selon l'une quelconque des revendications 1 à 10, **caractérisée en ce que** ce dernier peut être commandé de manière à modifier la position de l'extrémité de décharge du dispositif de décharge (40) par rapport à la machine de récolte (10) et/ou le sens d'éjection du dispositif de décharge (40) et/ou la position du véhicule de transport (12) par rapport à la machine de récolte (10).

12. Procédé pour transférer un produit de récolte agricole d'une machine de récolte (10) à un véhicule de transport (12) comprenant un contenant (18), le produit de récolte étant déposé successivement en différents emplacements du contenant (18) pendant la récolte, par un dispositif de décharge (40) de la machine de récolte (10), automatiquement en suivant une stratégie de chargement prédéterminée en fonction de modèles définis qui peuvent être suivis une fois ou plusieurs fois, **caractérisé en ce que** la stratégie de chargement est sélectionnée parmi différentes stratégies de chargement en fonction de la position des roues motrices (66) du véhicule de transport (12).
